# EUROPEAN PATENT APPLICATION

(11) **EP 0 864 459 A1**
(43) Date of publication of application: **16.09.1998**
(21) Application number: 98500069.4
(22) Date of filing: 12.03.1998
(51) Int. Cl.: B60N 2/22, A47C 7/44

(54) **Improvements to an articulated reclining backrest with lumbar support**

(30) Priority: 12.03.1997 MX 9701855
(71) Applicant: Cotero Gallardo, David, C.P. 52780 Huixquilucan, Estado de México (MX)
(72) Inventor: Cotero Gallardo, David, C.P. 52780 Huixquilucan, Estado de México (MX)
(74) Representative: Perez Bonal, Bernardo

(57) **Abstract**

This invention describes an articulated reclining backrest with a lumbar support (8), essentially formed by a backrest cut into two sections (4,2) and where one of them (4) is movable, also including a lumbar support (8) and the other section (2) is fixed to provide stability to the backrest as a whole, both sections being joined by a pivotal movement mechanism (18) which uses two springs (14) made from a polymeric material with high torsional resistance, in order to provide the backrest with movement, achieving that it returns to its original position when the weight of the users body is not applied to the same.

## Description

### TECHNICAL FIELD OF THE INVENTION

The invention is related to seats and backrests for generally used chairs or armchairs and more specifically to seats and seat-frames for use in the automobile industry.

### BACKGROUND OF THE INVENTION

A constant concern in the field of commonly-used chairs and armchairs is that of obtaining designs for backrests and seats which provide the possibility of reaching a reclined position while at the same time offering support to the lumbar region of the users, in order to achieve a comfortable and safe position for their body and avoiding positional bad-habits and the probable consequence of a traumatism to their spine in the case of an accident.

The automotive sector has been characterized in the field of reclining seats with lumbar support, due to the production of new and innovative ergonomic designs, related to the comfort and safety needs of the users of automobiles. These designs include mechanisms which combine several ergonomic factors such as:
a) the position of the seat in relation to the steering-wheel or the vehicles dashboard.
b) the changeable position which may be maintained between the elements of the seat-frame, seat and backrest, in order to provide the reclined position, and
c) the design of the forms of the seat, based on seat-covers, filling material and solid support elements (seat-frame), so as to comfortably situate the body and the form of the backrest in order to provide lumbar support to the users spine.

The simultaneous consideration of these ergonomic design factors, has produced mechanisms ranging from the very simple to the most sophisticated with the aim of synchronizing them and obtaining the best possible results. As a result, most of the existing mechanisms are based on the following basic general principles:
a) positioning levers which activate wire pulleys or cables which release or halt the sliding of the whole seat on parallel rails, governing the horizontal position of the seat, whilst:
b) the same principle is applied to the releasing or maintaining of the vertical position of the backrests to allow the entrance or exit of passengers to and from the back seat of the vehicle; in that:
c) the reclined position in the corresponding vertical position, erect position, of the backrest, is governed by means of positioning levers which when activated or immobilized, allow a variety of reclined positions for the backrest body which pivots on two fixed parallel positions which support the sides of the seat frame or this is achieved by means of a screwing mechanism which graduates the reclined position of the backrest which pivots on two parallel supports placed on the sides of the seat.

All the above mechanisms suffer from faults which make them relatively functional, as it is very common for the levers and pulleys system to get stuck or break and the back is released and deforms, causing the possibility that the users spine does not have the necessary lumbar support which would provide it with stability and safety in the case of an accident suffered by the vehicle in case of improper driving.

In virtue of all of the above, the inventor of this application investigated several alternatives, one of which was considered as being the most attractive from ergonomic, technical and economic viewpoints, consisting of a new reclining backrest with lumbar support which does away with the disadvantages of the previous designs, basically being formed by a backrest cut into two sections and where one of them immovable, also including a lumbar support and the other section is fixed to provide stability to the backrest as a whole, both sections being joined by a pivotal movement mechanism which uses two springs made from a polymeric material with high torsional resistance, in order to provide the backrest with movement, achieving that it returns to its original position when the weight of the users body is not applied to the same.

The reclining backrest with lumbar support of this invention, has the following advantages over the existing designs on the market:
a) it is manufactured at a lower cost, as the mechanism is made from pieces of stamped steel and two springs made from an elastic material with high torsional resistance.
b) the mechanisms is activated immediately when leaning back on it;
c) when activating the mechanism, two benefits are simultaneously provided; reclining and lumbar support;
d) they are more productive and require less maintenance;
e) due to the smaller number of pieces it is very easy to manufacture and assemble and therefore, the number of operating faults and maintenance measures is reduced.

Taking into account the disadvantages of the previous designs, the inventor of this application carried out a series of studies, tests and experiments which led him to provide a reclining backrest with lumbar support, which is new and innovative, which is of utmost importance in the engineering part of the invention.

### OBJECT OF THE INVENTION

The main object of this invention is to provide a reclining backrest with lumbar support, capable of creating conditions of stability, comfort and safety for the spine and body in general of the user.

### BRIEF DESCRIPTION OF THE DRAWINGS

For better understanding of the invention, it is described based on the preferred version which is illustrated in the attached drawings and in which:
Figure 1, is the front view of the two sections which form the counter-backrest and which correspond to the two sections with form the reclining backrest with lumbar support of this invention, to which they are joined.
Figure 2, is a side view of the two sections which form the counter-backrest and which correspond to the two sections with form the reclining backrest with lumbar support of this invention.
Figure 3, is a side view of the assembly of the top section of the reclining backrest with lumbar support of this invention,
Figure 4, is a front view of the assembly of the top section of the reclining backrest with lumbar support of this invention;
Figure 5, is a side view of the assembly of the bottom section of the reclining backrest with lumbar support of this invention;
Figures 5A1 AND 5A2, show the forms of the frontal stub which holds the top and lumbar support sections of the reclining backrest of this invention in position;
Figures 5B1 and 5B2, show the forms of the rear stub which holds the top and lumbar support sections of the reclining backrest of this invention in position;
Figure 6, is a front view of the assembly of the bottom section of the reclining backrest with lumbar support Of this invention;
Figure 7, is a plan view of the universal joint mechanism support of the reclining backrest with lumbar support of this invention;
Figure 8, is a side view of the universal joint mechanism support of the reclining backrest with lumbar support of this invention;
Figure 9, is an isometric view of the complete universal joint mechanism of the reclining backrest with lumbar support of this invention.

### PREFERRED VERSION OF THE INVENTION

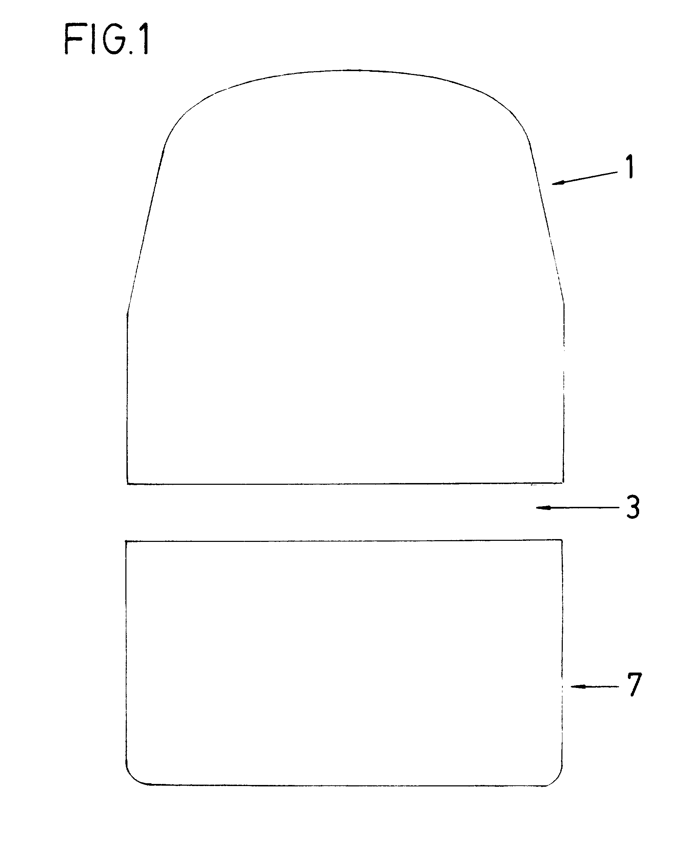

In reference to figure 1, the reclining backrest with lumbar support of this invention is formed by a fist top flat section (4) and a second lower flat section (2) (not shown), articulated by a universal joint mechanism (not shown) placed in the space (3) between both sections (4) and (2) (not shown). Both sections (4) and (2) (not shown) are reinforced by a counter-backrest divided into two partes (1) and (7) formed from sheets of resistant material which correspond and are joined to the same and which are shown in the drawing.

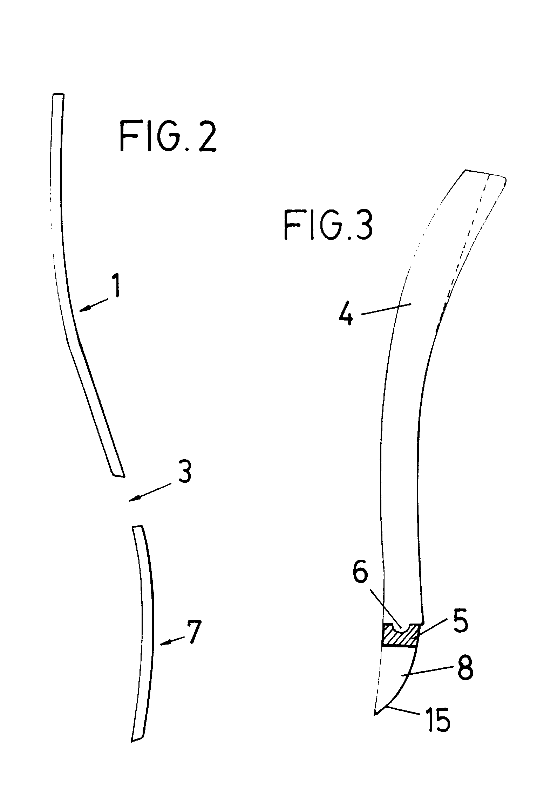

Now, referring to figure 2, this shows sections (1) and (7) of the counter-backrest which is joined to the reclining backrest with lumbar support (not shown) of this invention, formed by a first top flat section (4) and a second lower flat section (2) (not shown), and articulated by a universal joint mechanism (not shown) placed in the space (3) between both sections (4) and (2) (not shown) which laterally have a slightly curved profile.

In reference to figure 3, section (4) of the reclining backrest with lumbar support of this invention is provided with a pair of lateral rounded profiles (6) which pivot on a pair of corresponding lateral supports (5) (not shown) in the form of a 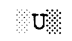 placed on the top part of the lower section (2) (not shown) of the backrest when the users body (not shown) leans on the same. The top section (4) is articulated to the lumbar support (8) by means of nuts and bolts (9 to 13) (not shown) and both section (4) and (8) provide torquing force on the springs (14) (not shown) placed between the upper (4) and lower (2) sections, when the users body (not shown) reclines on the upper section (4) of the backrest. In turn, sections (8) of the lumbar support are joined at the bottom to lower section (2) of the reclining backrest, by means of a curved edge (15) which fits into another upper edge (16) (not shown) of lower section (2), possessing a slope or inclined groove which corresponds to the edge (15).

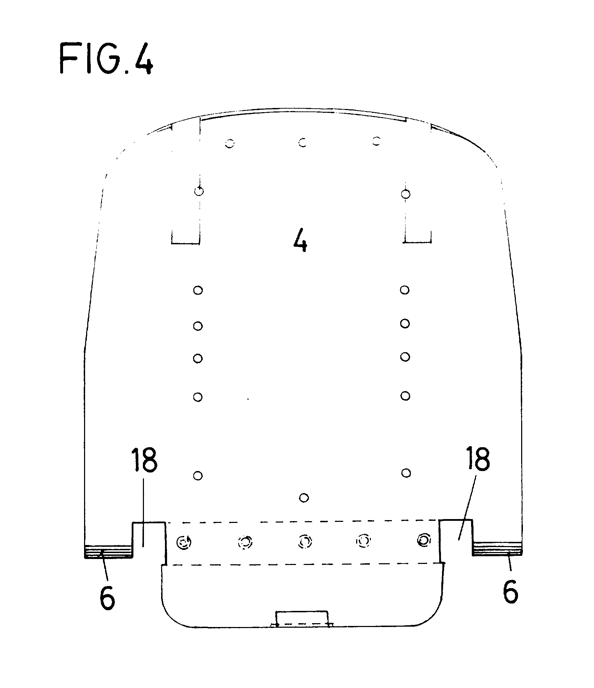

Now referring to figure 4, the upper section (4) of the reclining backrest with lumbar support of this invention, is articulated to section (8) of the lumbar support by means of five or more sets of nuts and bolts (9 to 13) which hold the support (17) (not shown) in position, to the ends of which the universal joint mechanism (not shown) are joined; whilst the lower par of this is provided with a pair of empty rectangular sections in which a pair of high resistance springs (14) are positioned (not shown), which allow the pivoting of the upper section (4) of the backrest on lower section (2) (not shown), by means of the semicircular rounded profiles (6) provided on both sides of the lower part of section (4). Section (8) of the lumbar support is joined at the bottom with lower section (2) (not shown) of the reclining backrest and this is joined at the top with the support (not shown) of the springs (14) (not shown), giving them solidity and flexibility at the upper and lower sections (4) and (2) of the backrest within ergonomic limits.

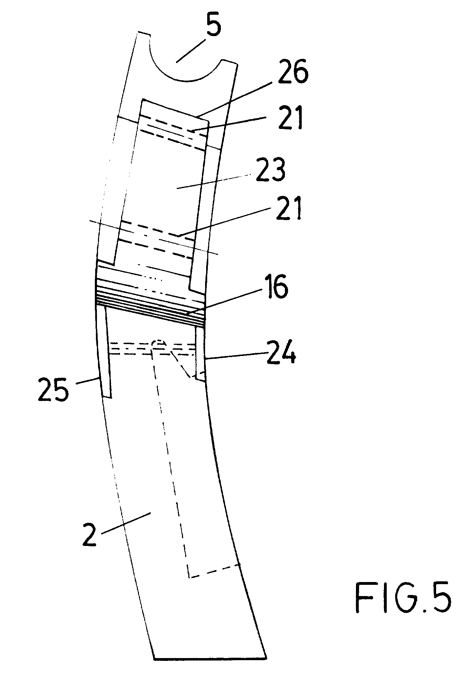

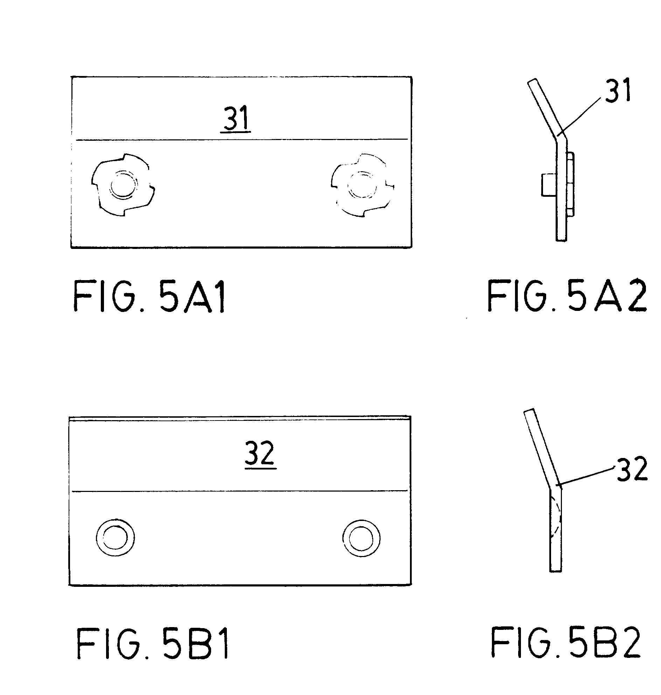

Now referring to figure 5, the lower section (2) of the reclining backrest of this invention, has at the top a pair of semicircular rounded sections (5), of a half-round type, u-shaped, at each end of the same, on which the sections (6) (not shown) slide and pivot corresponding to the upper section (4) (not shown) of the backrest, when the users body (not shown) leans on it. The lower section (2) of the backrest, is articulated with section (8) (not shown) of the lumbar support which in turn is joined to the upper section (4) (not shown), by means of two pairs of nuts and bolts (20) (not shown) and (21) positioned in the rectangular grooves (22) (not shown) and (23) respectively. The section (8) of the lumbar support is held in position by means of two stubs (24) and (25), frontal and rear respectively, constructed in the form of a rectangular steel plate which overlap the edge (16) of the lower section (2). The edge (16) has a slope which is used to fit the inner curved edge of the section (8) of the lumbar support (not shown).

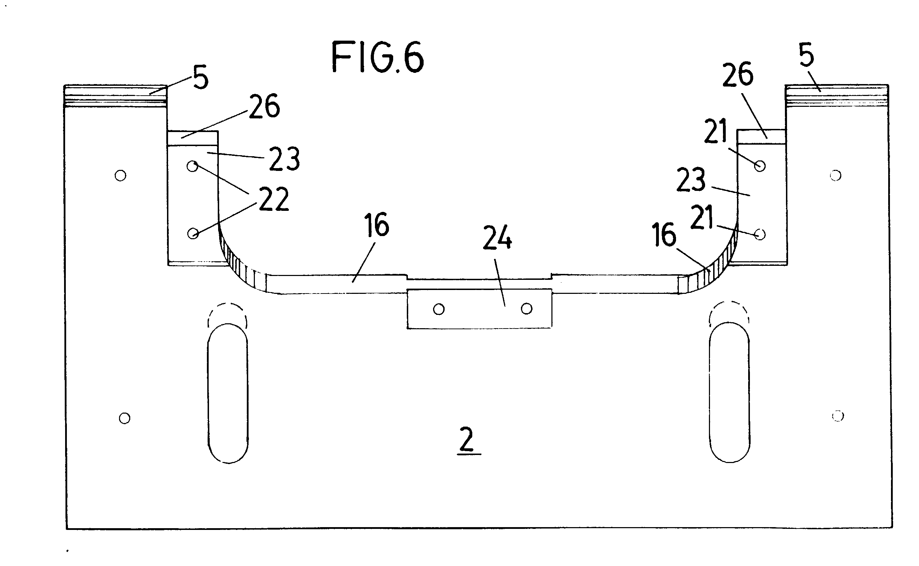

Now referring to figure 6, the lower part (2) of the reclining backrest of this invention is formed by a plate made of a resistant material, provided at the top with two half-round semicircular grooves (5) on which the upper section (4) (not shown) of the backrest slides and pivots, by means of the rounded edges (6) (not shown) of the upper section (4) whose forms correspond with (5).

The lower section (2) of the backrest couples with and is held in position with the section (8) of the lumbar support by means of the following mechanism:
a) the upper edges (16) and (26) of lower section (2) receive the edge (28) and the edge of the boxes (29 and 30) (not shown) which house the springs (14) (not shown) which allow the pivotal movement between both sections (8) and (2) and which cause a torquing force when the users body (not shown) reclines on the upper section (4) of the reclining backrest, making it possible for (4) to return to its original position when the weight is no longer applied;
b) The frontal and rear stubs (24 and 25) maintain section (8) of the lumbar support in position within the limits marked by the two inclined sides (26) and side (16) with the slope of the lower section (2) of the backrest.

With reference to figures 5A1 and 5A2, these show the forms of the frontal stub (31), which is provided with an upper flange with a slope of 20° with regards to the vertical axis.

Referring to figures 5B1 and 5B2, these show the forms of the rear stub (32), which is provided with an upper flange with a slope of 18° with regards to the vertical axis.

Now referring to figure 6, the lower section (2) of the reclining backrest of this invention is formed with a plate made from a resistant material in which the lateral semicircular grooves (5) are made in the form of a half-round, in which the rounded edges (6) (not shown) pivot of the upper section (4) (not shown) of the backrest; the pair of grooves (23) into the upper of faces of which the boxes (29) an (30) (not shown) are fitted, which house the springs (14) (not shown) make the pivotal movement of the upper section (4) (not shown) of the backrest possible. The upper section (4) of the backrest joins with the lower section (2) by means of the section (8) of the lumbar support (not shown), which is received on the sloping side (16) and held in position by the frontal (31) and rear (32) stubs. On the grooves (23) in the lower section (2) are mounted, by means of nuts and bolts (not shown) applied in the pairs of holes (21) and (22), four metal universal joint supports (not shown) which carry the boxes (29) and (30) (not shown) which house the springs (14) (not shown).

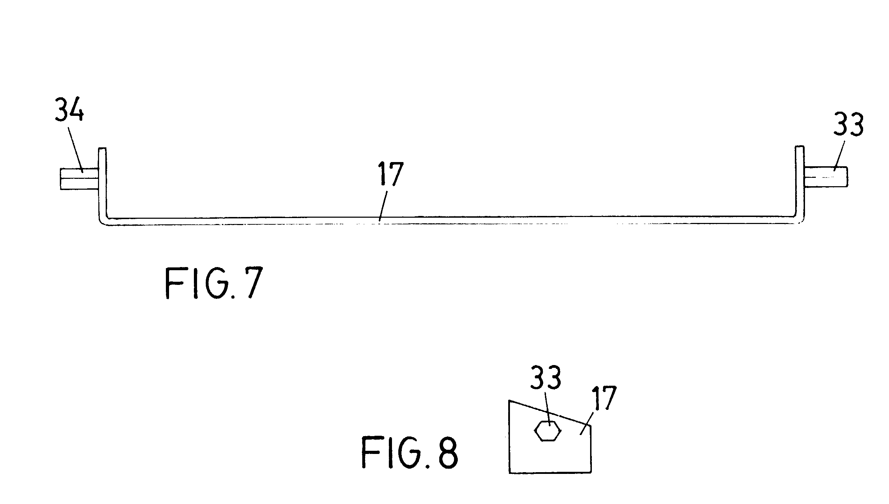

Now in relation to figure 7, the support (17) of the pivotal movement mechanism is formed by a rectangular section of resistant material, folded at the ends in a right angle. To the outer faces of the folded ends, a pair of hexagonal rods (33) and (34) are joined and soldered on which the pair of springs (14) (not shown) are inserted, provided with hexagonal holes. Supported on the hexagonal rods (33) and (34), the springs (14) develop a torquing force against the supports (not shown) as these are fixed to the lower section (2) of the reclining backrest of this invention.

Figure 8 shows us the position of the hexagonal rod (33) soldered to the support (17).

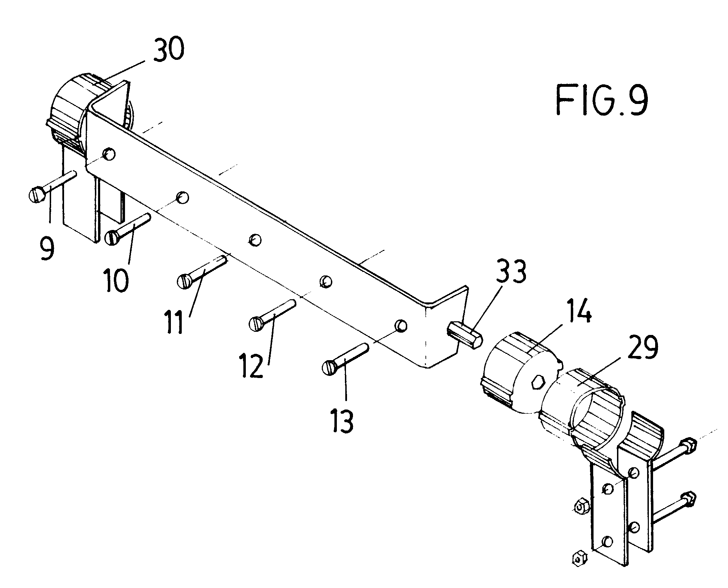

Now referring to figure 9, pivotal movement mechanism of the upper part (4) of the backrest (not shown), has a universal joint mechanism on the left end of the support (17) on the hexagonal rod (34) (not shown) formed by the universal joint supports which carry the box (30) which in turn houses the spring. The support (17) is joined to the upper section (4) (not shown) of the backrest by means of five respective nuts and bolts (9 to 13), so that when the users body (not shown) is reclined the support (17) tends to pivotally rotate within the body of the springs, by means of the hexagonal rods (33) and (34). The bodies of the springs made from high resistance rubber reinforced with metal springs, are fixed inside the respective boxes (29) and (30) which are carried on the supports fixed to the lower section (2) of the backrest, for which reason they tend to oppose the force applied by the users body (not shown) .

Having described the preferred version of the invention, it is evident for those experts in the art, that various changes and modifications may be made to this invention without deviating from the spirit, idea and scope of the following claims.

## Claims

1. Improvements to an articulated reclining backrest with lumbar support for multipurpose seats and chairs, characterized by being formed by a first section in the form of a plate which includes the lumbar support part and a second fixed section in the form of a plate which provides stability to the movable section, both sections, movable and fixed, being articulated by a pivotal movement mechanism formed in a resistant material based on springs, which makes the pivotal movement of the movable section possible when the force of the users bodyweight is applied to it and which recovers the original position when the force of the users bodyweight is no longer applied.

2. Improvements to an articulated reclining backrest with lumbar support for multipurpose seats and chairs, according to claim 1, characterized because the upper section of the reclining backrest with lumbar support of this invention is provided with a pair of lateral rounded profiles which pivot on a pair of corresponding lateral U-shaped supports provided in the upper part of the lower section of the backrest when the users body reclines on the upper section.

3. Improvements to an articulated reclining backrest with lumbar support for multipurpose seats an chairs, according to claim 1, characterized because the lumbar support section is robustly joined to the upper section of the backrest and proportionally follows the pivotal movement of the latter, providing lumbar support to the users when reclined on the upper section of the backrest.

4. Improvements to an articulated reclining backrest with lumbar support for multipurpose seats and chairs, according to claim 1, characterized because the pivotal movement mechanism articulates the upper and lower sections of the backrest and allows the formation of a torquing force by means of high resistant rubber springs with metal spring reinforcements, which provide stability and security when the users body is reclined on the upper section of the backrest and makes to return to its original position when the force of the users bodyweight os no longer applied.

5. Improvements to an articulated reclining backrest with lumbar support for multipurpose seats and chairs, according to claim 1, characterized because the pivotal movement mechanism is formed by a support which carries at its ends a universal joint mechanism mounted on hexagonal rods, formed by the universal joint supports which carry two boxes which house one respective spring. The support is joined to the upper section of the backrest by means of five respective nuts and bolts, so that when the users body reclines, the support tends to pivotally rotate within the body of the springs through the hexagonal rods. The bodies of the high resistance rubber springs reinforced with metal springs, are fixed inside the respective boxes which are supported on the universal joint supports fixed to the lower section of the backrest, for which reason they tend to oppose the force applied by the users body (not shown).

6. Improvements to an articulated reclining backrest with lumbar support for multipurpose seats and chairs, according to claim 1, characterized because the lower section of the reclining backrest of this invention is formed from a plate made from a resistant material in which two u-shaped lateral semicircular half-round grooves are made, in which the rounded edges of the upper section of the backrest pivot; in addition, it has a pair of grooves positioned lower and contiguous to the above ones and on the upper faces of which four metal universal joint supports are mounted by means of nuts and bolts applied in two sets of holes, which carry the boxes which house the springs which make the pivotal movement of the upper section of the backrest possible, which is received on one inclined side and held in position by the frontal and rear stubs.
